# FASCICULE DE BREVET EUROPEEN

(11) **EP 2 808 589 B1**
(45) Date de publication et mention de la délivrance du brevet: **11.05.2016**
(21) Numéro de dépôt: 14170312.4
(22) Date de dépôt: 28.05.2014
(51) Int. Cl.: F16L 1/06

(54) **ENTRETOISE POUR LA POSE DE CANALISATIONS DESTINÉES À ÊTRE ENFOUIES DANS LE SOL ET PROCÉDÉ D'ENFOUISSEMENT EN PARALLÈLE DE CANALISATIONS**
ABSTANDSHALTER FÜR DIE VERLEGUNG VON KANALISATIONSROHREN, DIE ZUM EINBETTEN IN DEN BODEN BESTIMMT SIND, UND EINBETTUNGSVERFAHREN FÜR PARALLEL VERLEGTE KANALISATIONSROHRE
SPACER FOR LAYING PIPELINES INTENDED FOR BEING BURIED IN THE GROUND AND METHOD FOR BURYING PIPELINES IN PARALLEL

(30) Priorité: 28.05.2013 FR 1354807
(43) Date de publication de la demande: 03.12.2014
(73) Titulaire: GRDF, 75009 Paris (FR)
(72) Inventeur: Di Liberto, Alphonse, 42320 Saint Christo en Jarez (FR); Fortier, Dominique, 42100 Saint-Etienne (FR)
(74) Mandataire: Boura, Olivier

(56) Documents cités:
- CH-A5- 659 513
- DE-A1- 4 335 670
- DE-A1-102011 111 778
- FR-A- 1 539 837
- US-A- 5 827 441
- US-B1- 7 908 725

## Description

### Arrière-plan de l'invention

La présente invention se rapporte au domaine général des canalisations enfouies dans le sol, notamment pour l'acheminement de gaz et pour le transport de câbles électriques ou de câbles téléphoniques.

L'acheminement de gaz s'effectue généralement par l'intermédiaire de canalisations qui sont enfouies dans le sol. En particulier, lorsqu'il est nécessaire de mettre en place un système d'acheminement de gaz, par exemple le long d'une voie d'autoroute, une tranchée est creusée le long de cette voie. Le fond de fouille est recouvert d'un lit de sable aplani et une ou plusieurs canalisations d'acheminement de gaz sont déposées directement sur ce lit de sable. La fouille est ensuite remblayée, principalement par du sable.

Par ailleurs, il est courant de dérouler un réseau électrique ou téléphonique parallèlement à des canalisations d'acheminement de gaz. A cet effet, des canalisations de transport de câbles électriques ou téléphoniques sont posées dans la tranchée réalisée pour la pose des canalisations d'acheminement de gaz parallèlement à celles-ci.

Au cours du déroulement de ces canalisations de transport de câbles, il est nécessaire de respecter une distance réglementaire avec la canalisation d'acheminement de gaz voisine (cette distance est typiquement de l'ordre de 20cm environ).

Une solution envisagée pour y parvenir consiste à laisser l'opérateur juger de visu du respect de cette distance réglementaire. Cependant, en l'absence de structure maintenant l'écart entre les deux canalisations, les opérations qui suivent la pose des canalisations (telles que le remblaiement, le compactage, la création d'une prise de branchement, etc.) affectent la distance entre les canalisations parallèles en provoquant leur rapprochement.

Pour résoudre ce problème, une autre solution envisagée consiste à interposer entre les canalisations parallèles des entretoises dont la longueur correspond à la distance réglementaire à respecter. Ces entretoises sont fixes et rigides pour éviter tout rapprochement ultérieur des canalisations.

Cette solution présente toutefois de nombreux inconvénients. En particulier, les entretoises proposées exercent une pression permanente sur les canalisations. Or, lorsque ces canalisations sont réalisées en polyéthylène, ce contact permanent avec les entretoises accélère la dégradation des canalisations et diminue d'autant leur durée de vie.

Le document DE 10 2011 111 778 A1 montre une entretoise recevant des canalisations.

### Objet et résumé de l'invention

La présente invention a donc pour but principal de pallier de tels inconvénients en proposant une entretoise permettant de respecter les distances réglementaires entre canalisations parallèles tout en étant simple de mise en oeuvre, peu coûteuse et non agressive vis-à-vis des canalisations.

Conformément à l'invention, ce but est atteint grâce à une entretoise pour la pose d'au moins deux canalisations destinées à être enfouies en parallèle dans le sol, comprenant une structure rigide réalisée dans un matériau biodégradable qui est destinée à reposer sur un fond de fouille et qui est munie de plusieurs longerons dont la longueur est prédéterminée en fonction de l'espacement souhaité entre deux canalisations voisines, les longerons étant espacés latéralement les uns des autres et reliés entre eux par des traverses pour former des alvéoles ouvertes qui sont destinées à s'étendre perpendiculairement au fond de fouille lorsque la structure repose sur celui-ci, chaque longeron présentant à chacune de ses extrémités longitudinales au moins un emplacement de forme complémentaire aux canalisations.

Grâce à ses emplacements espacés d'une longueur prédéterminée, une telle entretoise permet de garantir le maintien de la distance réglementaire entre deux canalisations parallèles. De plus, cette entretoise est réalisée dans un matériau biodégradable de sorte qu'elle se décompose naturellement et spontanément. Ainsi, la pression qu'elle exerce sur les canalisations est temporaire, le temps pour elle de se décomposer. En outre, cette entretoise est peu coûteuse à réaliser (par exemple à partir de carton), facile à manipuler et respectueuse de l'environnement (car réalisé dans un matériau bio).

De plus, un tel arrangement de la structure de l'entretoise présente l'avantage que les alvéoles formées par les longerons et les traverses sont remplies de sable au cours de l'opération de remblaiement de la fouille. Ainsi, l'homogénéité du remblaiement et la qualité du compactage ne sont pas altérés par la présence de ces entretoises. En particulier, ces alvéoles étant remplies de sable, la décomposition ultérieure de l'entretoise ne laissera pas un vide important dans le sol.

La structure peut être réalisée en plastique biodégradable ou à partir de matières naturelles ou à partir de matières rigides à base végétale. De préférence, la structure rigide est réalisée en carton. Un tel matériau permet de réaliser une structure particulièrement peu onéreuse, facile de manipulation et légère à transporter.

Selon un mode de réalisation, les emplacements de la structure peuvent présentent chacun une forme d'arrondi ouvert vers le haut de la fouille et sur lequel est destiné à reposer la canalisation à enfouir.

Selon un autre mode de réalisation, les emplacements de la structure présentent chacun une forme d'arrondi ouvert vers des bords de la fouille et destiné à recevoir latéralement une partie d'une canalisation à enfouir.

Selon encore un autre mode de réalisation, les emplacements de la structure présentent chacun une forme d'arrondi ouvert le fond de fouille et destiné à venir enjamber une partie d'une canalisation à enfouir.

L'invention a également pour objet un procédé d'enfouissement dans le sol de deux canalisations, comprenant la réalisation d'une fouille, la pose des canalisations parallèlement l'une à l'autre en intercalant entre elles à intervalles réguliers des entretoises telles que définies précédemment, et le remblaiement de la fouille.

De préférence, le fond de fouille est recouvert d'un lit de sable aplani préalablement à la pose des canalisations et le remblaiement est réalisé principalement au moyen de sable.

Les entretoises peuvent être disposées tous les mètres et les canalisations peuvent être des canalisations d'acheminement de gaz et/ou de transport de câbles électriques ou téléphoniques. De plus, ces canalisations peuvent être réalisées en polyéthylène.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique et en perspective d'une entretoise conforme à l'invention ;
- la figure 2 est une vue montrant un exemple d'implantation d'entretoises telles que celle de la figure 1 ;
- la figure 3 est une vue schématique et en perspective d'une entretoise selon une variante de réalisation de l'invention ; et
- la figure 4 est une vue schématique et en perspective d'une entretoise selon une variante de réalisation de l'invention.

### Description détaillée de l'invention

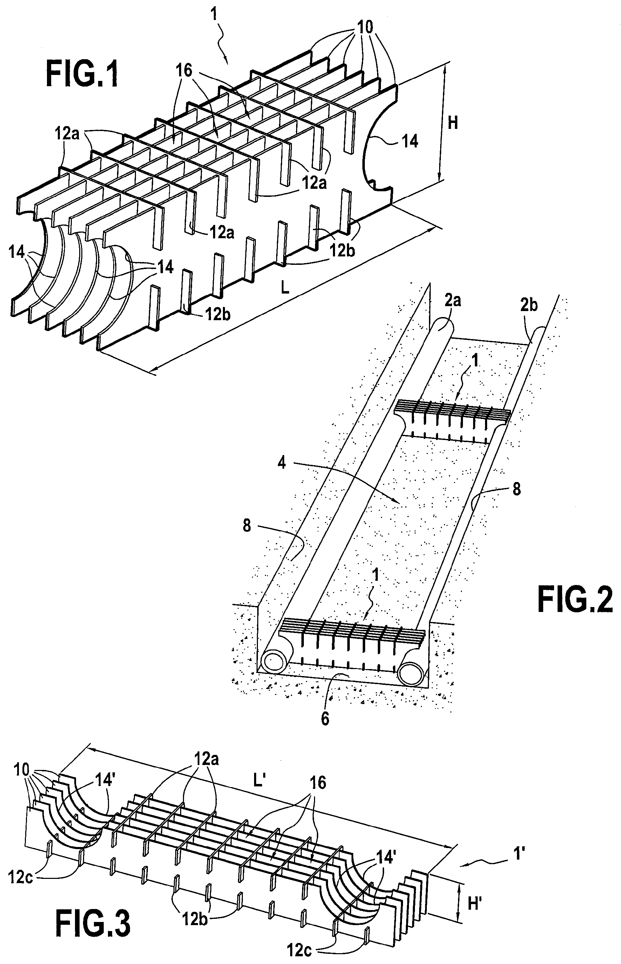

Les figures 1 et 2 représentent des entretoises 1 pour la pose de canalisations selon un mode de réalisation de l'invention.

Ces entretoises 1 sont destinées à être interposées à intervalles réguliers (par exemple tous les 1m) entre deux canalisations 2a, 2b parallèles. Typiquement, ces canalisations sont réalisées en polyéthylène (PE) et servent à l'acheminement de gaz ou au transport de câbles électriques ou téléphoniques.

Les canalisations 2a, 2b sont enfouies dans le sol. A cet effet, une tranchée 4 est creusée pour les enterrer. Cette tranchée, également appelée fouille, présente un fond 6 et deux bords latéraux 8.

Les entretoises 1 comprennent chacune une structure rigide qui repose à plat sur le fond 6 de fouille. Cette structure rigide est munie de plusieurs longerons 10 (au nombre de six dans cet exemple) espacés latéralement les uns des autres et reliés entre eux par des traverses 12 (au nombre de quatorze dans cet exemple).

Le nombre de longerons et de traverses doit être suffisant pour conférer à la structure sa rigidité et lui permettre de reposer de façon stable sur le fond de fouille.

Les longerons 10 sont des plaques planes et rectangulaires qui sont disposées parallèlement les unes aux autres. Les longerons ont une longueur L qui est prédéterminée en fonction de l'espacement souhaité entre les deux canalisations 2a, 2b. Au niveau de chacune de leurs extrémités longitudinales, ces longerons se terminent par un emplacement 14 destiné à recevoir une partie des canalisations entre lesquelles est interposée l'entretoise.

Dans l'exemple de réalisation des figures 1 et 2, ces emplacements 14 présentent chacun une forme d'arrondi ouvert vers l'extérieur, c'est-à-dire vers les bords latéraux 8 de la fouille lorsque l'entretoise est en position dans celle-ci. En pratique, ces emplacements sont de simples découpes réalisées dans les extrémités longitudinales des longerons.

Les traverses 12 de la structure de l'entretoise servent à relier entre eux les longerons. Dans l'exemple des figures 1 et 2, elles se répartissent entre des traverses supérieures 12a et des traverses inférieures 12b.

Les longerons 10 et les traverses 12 de la structure forment ainsi une pluralité d'alvéoles 16 à section rectangulaire qui s'étendent perpendiculairement au fond de fouille lorsque l'entretoise repose sur celui-ci. Ainsi, lors de l'opération de remblaiement de la fouille 4, le sable utilisé vient remplir ces alvéoles 16.

Par ailleurs, l'ensemble de la structure de l'entretoise, c'est-à-dire les longerons 10 et les traverses 12, sont réalisée dans un matériau biodégradable.

La biodégradation est un phénomène naturel de décomposition de matières organiques par des micro-organismes comme les bactéries, les champignons ou les algues. Ce phénomène est spontané et parfois lent. Par matériau biodégradable, on entend un matériau ayant des caractéristiques de biodégradabilité très fortes, c'est-à-dire apte à se décomposer naturellement dans un délai d'environ 3 mois.

Le matériau biodégradable choisi peut par exemple être un plastique biodégradable (c'est-à-dire en plastique conçu à partir de maïs, de blé, de seigle, de pomme de terre, etc.) ou un matériau conçu à partir de matières naturelles (telles que du bois, du liège, etc.) ou encore un matériau conçu à partir de matières rigides à base végétale (par exemple de l'huile, de la canne à sucre, etc.).

De préférence, on choisira du carton comme matériau biodégradable pour réaliser la structure de l'entretoise 1 selon l'invention. Un tel matériau est en effet peu onéreux, léger à transporter, facile de manipulation et présentant une rigidité suffisante pour l'application envisagée. De plus, ce matériau n'est pas agressif lorsqu'il est en contact avec le polyéthylène des canalisations.

La durée de décomposition d'une entretoise réalisée en carton dépend notamment de la nature du sol dans lequel est réalisée la fouille et de l'humidité environnante. Globalement, une fois l'entretoise enterrée dans une couche de sable, 2 années complètes seront nécessaires pour obtenir sa décomposition quasi-complète.

L'opération d'enfouissement dans le sol des canalisations 2a, 2b est succinctement le suivant. Comme indiqué précédemment, une tranchée 4 aux dimensions adéquates est creusée dans le sol. Après avoir recouvert le fond 6 de fouille d'un lit de sable aplani, une première canalisation 2a est posée sur cette couche de sable. Des entretoises 1 conformes à l'invention sont alors positionnées à intervalles réguliers (par exemple tous les 1m) en appliquant les emplacements 14 contre la canalisation. La seconde canalisation 2b est alors également posée sur le lit de sable en venant en butée contre les emplacements opposés des entretoises. Lorsque les entretoises et les canalisations sont toutes en place, une autre couche de sable est déversée dans la fouille, recouvrant l'ensemble, puis aplanie. Les entretoises 1 et les canalisations 2a, 2b sont ainsi « noyées » dans le sable.

On notera que cette opération d'enfouissement s'applique aussi bien à la pose simultanée de deux canalisations qu'à la pose d'une canalisation neuve à proximité d'une canalisation déjà existante.

La figure 3 représente une variante de réalisation d'une entretoise l' selon l'invention.

Cette entretoise 1' se distingue de celle précédemment décrite notamment en ce que les emplacements 14' de la structure qui présentent chacun une forme d'arrondi ouvert vers le haut de la fouille et sur lequel est destiné à reposer la canalisation à enfouir.

Dans la partie de la structure formant ces emplacements 14', il peut être nécessaire d'ajouter des traverses 12c afin de conférer une plus grande rigidité à ces zones supportant le poids des canalisations.

L'entretoise 1' selon cette variante de réalisation présente ainsi une longueur L' totale qui est supérieure à la longueur L de l'entretoise 1 des figures 1 et 2. En revanche, la hauteur H' de cette entretoise 1' peut être plus faible que la hauteur H de l'entretoise 1 des figures 1 et 2.

Bien entendu, il est possible d'envisager encore d'autres architectures de structure pour réaliser l'entretoise selon l'invention. En particulier, ces entretoises peuvent être dessinées pour recevoir à chaque extrémité plus d'une canalisation, par exemple deux canalisations posées l'une au-dessus de l'autre.

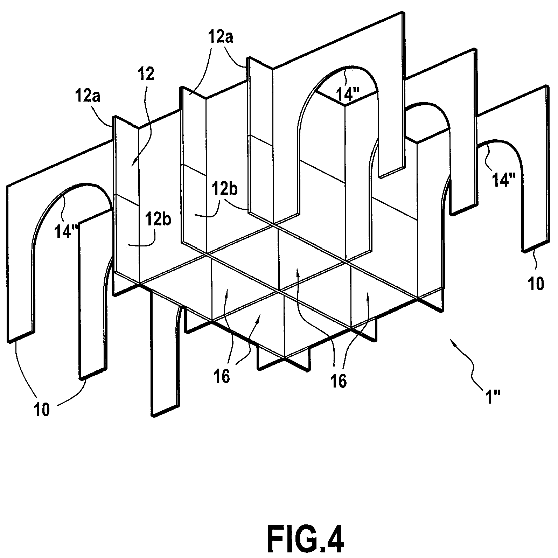

La figure 4 représente une autre variante de réalisation d'une entretoise 1" selon l'invention.

Cette entretoise 1" se distingue des précédentes notamment en ce que les emplacements 14" de la structure présentent chacun une forme d'arrondi ouvert vers le fond de fouille et sont destinés à venir enjamber les canalisations à enfouir (sans pour autant venir en contact avec les canalisations de sorte à ne pas créer de point de contact avec ces dernières).

Plus précisément, la structure de l'entretoise 1"comprend ici trois longerons 10 espacés latéralement les uns des autres et reliés entre eux par des trois traverses 12 pour former quatre alvéoles 16 à section rectangulaire qui s'étendent perpendiculairement au fond de fouille.

Par ailleurs, les traverses 12 de la structure de l'entretoise 1" se répartissent entre deux traverses supérieures 12a (positionnées du côté du haut de fouille) et des traverses inférieures 12b (positionnées du côté du fond de fouille). Ces traverses supérieures et inférieures sont identiques (et donc interchangeables) et sont montées sur les longerons 10 de la structure par l'intermédiaire d'encoches (non représentées) réalisées sur les longerons et les traverses.

## Revendications

1. Entretoise (1 ; 1' ; 1") pour la pose d'au moins deux canalisations (2a, 2b) destinées à être enfouies en parallèle dans le sol, comprenant une structure rigide réalisée dans un matériau biodégradable qui est destinée à reposer sur un fond (6) de fouille (4) et qui est munie de plusieurs longerons (10) dont la longueur (L ; L') est prédéterminée en fonction de l'espacement souhaité entre deux canalisations voisines, les longerons étant espacés latéralement les uns des autres et reliés entre eux par des traverses (12a, 12b, 12c) pour former des alvéoles (16) ouvertes qui sont destinées à s'étendre perpendiculairement au fond de fouille lorsque la structure repose sur celui-ci, chaque longeron présentant à chacune de ses extrémités longitudinales au moins un emplacement (14 ; 14' ; 14") de forme complémentaire aux canalisations.

2. Entretoise selon la revendication 1, dans laquelle la structure est réalisée en plastique biodégradable ou à partir de matières naturelles ou à partir de matières rigides à base végétale.

3. Entretoise selon la revendication 2, dans laquelle la structure rigide est réalisée en carton.

4. Entretoise (1') selon l'une quelconque des revendications 1 à 3, dans laquelle les emplacements (14') de la structure présentent chacun une forme d'arrondi ouvert vers le haut de la fouille et sur lequel est destiné à reposer la canalisation à enfouir.

5. Entretoise (1) selon l'une quelconque des revendications 1 à 3, dans laquelle les emplacements (14) de la structure présentent chacun une forme d'arrondi ouvert vers des bords (8) de la fouille et destiné à recevoir latéralement une partie d'une canalisation à enfouir.

6. Entretoise (1") selon l'une quelconque des revendications 1 à 3, dans laquelle les emplacements (14") de la structure présentent chacun une forme d'arrondi ouvert le fond (6) de fouille et destiné à venir enjamber une partie d'une canalisation à enfouir.

7. Procédé d'enfouissement dans le sol de deux canalisations, comprenant la réalisation d'une fouille (4), la pose des canalisations (2a, 2b) parallèlement l'une à l'autre en intercalant entre elles à intervalles réguliers des entretoises (1 ; 1' ; 1") selon l'une quelconque des revendications 1 à 6, et le remblaiement de la fouille.

8. Procédé selon la revendication 7, dans lequel le fond (6) de fouille est recouvert d'un lit de sable aplani préalablement à la pose des canalisations et le remblaiement est réalisé principalement au moyen de sable.

9. Procédé selon l'une des revendications 7 et 8, dans lequel les entretoises sont disposées tous les mètres.

10. Procédé selon l'une quelconque des revendications 7 à 9, dans lequel les canalisations sont des canalisations d'acheminement de gaz et/ou de transport de câbles électriques ou téléphoniques.

11. Procédé selon l'une quelconque des revendications 7 à 10, dans lequel les canalisations sont réalisées en polyéthylène.

## Patentansprüche

1. Abstandshalter (1; 1', 1") für die Verlegung von wenigstens zwei Kanalisationsrohren (2a, 2b), die dazu bestimmt sind, parallel in den Boden eingesetzt zu werden, umfassend eine starre Struktur, die aus einem biologisch abbaubaren Material hergestellt und dazu bestimmt ist, auf einem Boden (6) einer Grube (4) zu liegen, und die mit mehreren Längsträgern (10) versehen ist, deren Länge (L; L') in Abhängigkeit von dem gewünschten Abstand zwischen zwei benachbarten Kanalisationsrohren vorbestimmt ist, wobei die Längsträger seitlich zueinander beabstandet und miteinander durch Querstreben (12a, 12b, 12c) verbunden sind, um offene Vertiefungen (16) zu bilden, die dazu bestimmt sind, sich senkrecht zum Boden der Grube zu erstrecken, wenn die Struktur auf dieser liegt, wobei jeder Längsträger an jedem seiner Längsenden mindestens eine Stelle (14; 14'; 14") von komplementärer Form zu den Kanalisationsrohren aufweist.

2. Abstandshalter nach Anspruch 1, bei dem die Struktur aus biologisch abbaubarem Kunststoff oder aus natürlichen Materialien oder aus starren Materialien auf pflanzlicher Basis hergestellt ist.

3. Abstandshalter nach Anspruch 2, bei dem die starre Struktur aus Karton hergestellt ist.

4. Abstandshalter (1') nach einem der Ansprüche 1 bis 3, bei dem die Stellen (14') der Struktur jeweils eine nach oben zur Grube offene abgerundete Form aufweisen, und auf dem das einzusetzende Kanalisationsrohr liegen soll.

5. Abstandshalter (1) nach einem der Ansprüche 1 bis 3, bei dem die Stellen (14) der Struktur jeweils eine zu den Rändern (8) der Grube offene abgerundete Form aufweisen, und der dazu bestimmt ist, seitlich einen Teil eines einzusetzenden Kanalisationsrohrs aufzunehmen.

6. Abstandshalter (1 ") nach einem der Ansprüche 1 bis 3, bei dem die Stellen (14") der Struktur jeweils eine zum Boden (6) der Grube offene abgerundete Form aufweisen, und der dazu bestimmt ist, einen Teil eines einzusetzenden Kanalisationsrohrs zu überspannen.

7. Verfahren zum Einsetzen von zwei Kanalisationsrohren in den Boden, umfassend die Herstellung einer Grube (4), die Verlegung der Kanalisationsrohre (2a, 2b) parallel zueinander, wobei zwischen ihnen in regelmäßigen Abständen Abstandshalter (1; 1'; 1") nach einem der Ansprüche 1 bis 6 angeordnet werden, und das Aufschütten der Grube.

8. Verfahren nach Anspruch 7, bei dem der Boden (6) der Grube mit einem planierten Sandbett vor der Verlegung der Kanalisationsrohre bedeckt wird, und das Aufschütten hauptsächlich mit Hilfe von Sand erfolgt.

9. Verfahren nach einem der Ansprüche 7 und 8, bei dem die Abstandshalter alle Meter angeordnet sind.

10. Verfahren nach einem der Ansprüche 7 bis 9, bei dem die Kanalisationsrohre Rohre zur Beförderung von Gas und/oder zum Transport von Elektro- oder Telefonkabeln sind.

11. Verfahren nach einem der Ansprüche 7 bis 10, bei dem die Kanalisationsrohre aus Polyethylen hergestellt sind.

## Claims

1. A spacer (1; 1'; 1") for installation of at least two pipes (2a, 2b) intended to be buried in parallel in the ground, including a rigid structure made of a biodegradable material intended to rest on the bottom (6) of an excavation (4) and which is equipped with several stringers (10) the height whereof (L; L') is predetermined according to the spacing desired between the two adjoining pipes, the stringers being spaced laterally from one another and interconnected by crossbeams (12a, 12b, 12c) to form open holes (16) which are intended to extend perpendicularly to the bottom of the excavation when the structure is resting on it, each stringer having at each of its longitudinal ends at least one position (14; 14'; 14") with a shape complementary to the shape of the pipes.

2. The spacer according to claim 1, wherein the structure is made of biodegradable plastic or from natural materials or from rigid plant-based materials.

3. The spacer according to claim 2, wherein the rigid structure is made of cardboard.

4. The spacer (1') according to any one of claims 1 to 3, wherein the positions (14') of the structure each have a rounded design open toward the top of the excavation and on which the pipe to be buried is intended to rest.

5. The spacer (1) according to any one of claims 1 to 3, wherein the positions (14) of the structure each have a rounded design open toward the edges (8) of the excavation and intended to laterally accommodate a portion of the pipe to be buried.

6. The spacer (1") according to any one of claims 1 to 3, wherein the positions (14") of the structure each have a rounded design open toward the bottom (6) of the excavation and intended to span a portion of a pipe to be buried.

7. A method for burying two pipes in the ground, including the accomplishment of an excavation (4), the installation of the pipes (2a, 2b) parallel to one another by interposing between them at regular intervals spacers (1; 1'; 1") according to any one of claims 1 to 6, and the backfilling of the excavation.

8. The method according to claim 7, wherein the bottom (6) of the excavation is covered with a flattened bed of sand prior to the installation of the pipes and the backfilling is primarily accomplished using sand.

9. The method according to one of claims 7 and 8, wherein the spacers are positioned every meter.

10. The method according to any one of claims 7 to 9, wherein the pipes are pipes for conveying gas and/or for transporting electrical or telephone cables.

11. The method according to any one of claims 7 to 10, wherein the pipes are made of polyethylene.
